# EUROPEAN PATENT APPLICATION

(11) **EP 3 678 041 A1**
(43) Date of publication of application: **08.07.2020**
(21) Application number: 20160413.9
(22) Date of filing: 24.12.2016
(51) Int. Cl.: G06F 21/62, G06F 21/32, G06F 21/83

(54) **APPARATUS AND METHOD FOR CAMERA-BASED USER AUTHENTICATION FOR CONTENT ACCESS**

(30) Priority: 30.12.2015 US 201514985035
(62) Divisional of application: 16881113.1
(71) Applicant: Huawei Technologies Co. Ltd., Guangdong 518129 (CN)
(72) Inventor: VADLAMUDI, Srinivas R., San Diego, CA California 92127 (US)
(74) Representative: Maiwald Patent- und Rechtsanwaltsgesellschaft mbH

(57) **Abstract**

System and method embodiments are provided for camera-based user authentication for content on a user device. In an embodiment, an action by a user for displaying content on a screen of the user device is detected. A content file on the user device is then scanned to determine whether the content file is protected. An image of the user is also captured without input from the user and without notifying or prompting the user. The content file is displayed on the screen if the content file is not protected, or if the content file is protected and the captured image of the user matches a retrieved image from an allowed users list of the content file.

## Description

### CROSS REFERENCE

This application claims priority to U.S. non-provisional patent application Serial No. 14/985,035, filed on December 30, 2015 and entitled "Apparatus and Method for Camera-Based User Authentication for Content Access.

### TECHNICAL FIELD

The present invention relates to the protection of content on user and mobile devices, and, in particular embodiments, to an apparatus and method for camera-based user authentication for content access.

### BACKGROUND

User operated devices, such as mobile devices (e.g., smartphones or computer tablets), can include a user authentication feature by which the device is activated upon detecting an authorized user. This is also referred to as unlocking the device. For example, the detection can be achieved via a password or a fingerprint of the user. This authentication protects the device from unauthorized access and can be used as a first level of protection for the device. Typically, upon successful user authentication, content on the device can be accessed by any user as long as the device is not locked again. A timer can be used to lock the device again after a predefined period of user inactivity on the device, e.g., when the timer expires. There is a need for an improved and more subtle user authentication mechanism that provides better security and protection to user's content on a user or mobile device.

### SUMMARY OF THE INVENTION

In accordance with an embodiment, a method for camera-based user authentication for content on a device includes providing a content on the device. The content is associated with one or more user identifiers representing authorized users of the content. The method further includes capturing an image of the user without the user being aware of the capturing in response to a content access request from the user, and determining whether the user is among the authorized users based on the captured image and the user identifiers of the content. If the user is determined to be among the authorized users of the content, the content or a representation of the content is displayed on a screen of the device to allow the user to access that content. Alternatively, the content or the representation of the content is not displayed on the screen if the content is protected and the user is not among the users allowed to view the content according to the captured image and the user identifiers of the content. In an embodiment, the user identifiers of the content are obtained by retrieving an allowed users list of the content. The allowed users list includes an image of each user allowed to access the content.

In accordance with another embodiment, a method for camera-based user authentication for content on a user device includes in response to a user attempting to access a content on a device, determining whether the user is authorized to access the content based on attributes of the content. The attributes indicate whether the content is protected and an allowed users list including an image of each user allowed to access the content. The method further includes prohibiting the user from accessing the content or a representation of the content if the content is protected and the user is excluded from an allowed users list.

In accordance with yet another embodiment, a user device supporting camera-based user authentication for content includes at least one processor coupled to a memory and a non-transitory computer readable storage medium storing programming for execution by the at least one processor. The programming includes instructions to detect an action by a user for displaying content on a screen of the user device, and scan a content file on the user device to determine whether the content file is protected. The programming includes further instructions to capture an image of the user without input from the user and without notifying or prompting the user, and display the content file on the screen if the content file is protected and the captured image of the user matches a retrieved image from an allowed users list of the content file.

The foregoing has outlined rather broadly the features of an embodiment of the present invention in order that the detailed description of the invention that follows may be better understood. Additional features and advantages of embodiments of the invention will be described hereinafter, which form the subject of the claims of the invention. It should be appreciated by those skilled in the art that the conception and specific embodiments disclosed may be readily utilized as a basis for modifying or designing other structures or processes for carrying out the same purposes of the present invention. It should also be realized by those skilled in the art that such equivalent constructions do not depart from the scope of the invention as set forth in the appended claims.

### BRIEF DESCRIPTION OF THE DRAWINGS

For a more complete understanding of the present invention, and the advantages thereof, reference is now made to the following descriptions taken in conjunction with the accompanying drawing, in which:
Figure 1 illustrates an exemplary data structure for attributes associated with content on a device including a list of allowed users for accessing or viewing the content;
Figure 2 shows an embodiment of a method for setting up allowed users for viewing or accessing content on a device;
Figure 3 shows an embodiment of a method for generating a list of files that are authorized for accessing or viewing on a device;
Figure 4 shows an embodiment of a method for authenticating a user to access or view content on a device;
Figure 5 shows sample user interfaces with content protection according to one embodiment of a camera-based user authentication scheme;
Figure 6 shows an embodiment of a method for camera-based user authentication for content on a device; and
Figure 7 is a diagram of a processing system that can be used to implement various embodiments.

Corresponding numerals and symbols in the different figures generally refer to corresponding parts unless otherwise indicated. The figures are drawn to clearly illustrate the relevant aspects of the embodiments and are not necessarily drawn to scale.

### DETAILED DESCRIPTION OF ILLUSTRATIVE EMBODIMENTS

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention.

System and method embodiments are provided herein for camera-based user authentication for content on a user device. Devices such as user or mobile devices allow the storing and viewing of data for various content. The content can be data in one or more files or any data having a representation of some sort on the screen of the device, such as in the form of an icon or image or text. The content can be user's data residing on the device such as a photo, a document, other types of files, or a folder containing files. Content on the device can also be software running on the device, such as an app on a smartphone or computer tablet. The camera-based mechanism may perform user authentication to protect content access without requiring a user's attention to apply locking/unlocking features to access specific content on the device (for example using a specific password for a certain content or other means). Further, the camera-based mechanism can hide a content from an unauthorized user without alerting the unauthorized user or a hacker to the existence of such content on the device or to attempt some means to unlock the content.

The user device can be a mobile device equipped with a camera for capturing digital pictures, such as a smartphone or a computer tablet. For instance, such devices can be equipped with camera devices on the device screen side facing the user, also referred to sometime as a face cam. The face cam is suitable for capturing a facial image of the user. The camera on the user device is used for authenticating the user to access a specific content, e.g., a picture, a video, a file, a folder (i.e., a group of files), or any data content stored or accessible on the device. A representation of the content is displayed on the device's screen if the user's captured image is verified to be for a user allowed to view or access the content. Otherwise, the content is not displayed and kept hidden from unauthorized users. This camera-based user authentication is transparent to the user in that it is implemented without the user being aware of it. For example, the user's image can be captured by the device and used to authenticate the user without requesting or using input from the user. Thus, unauthorized users are kept unaware of the presence of protected and hidden content on the device. This provides an extra level of security and prevents users that are unaware of the content from attempting to overcome or hack the system to access or view the content.

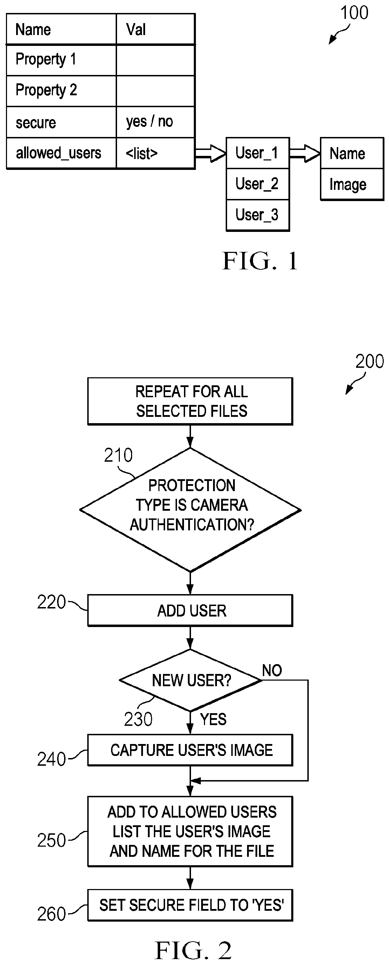

In an embodiment to enable the camera-based user authentication scheme, a list of users allowed to access or view content on the device is first initialized. Figure 1 shows a data structure for attributes associated with content on a device (e.g., a smartphone or other mobile devices) including a list of allowed users for accessing or viewing the content on the device. The content may be a file, a portion of a file, one or more files, or any data that can be represented in some form (e.g., as an icon, picture, or text) on a screen of the device. Examples of such content include as an image, a folder of images, a video, a document file, other types of files, or an app (e.g., a program on the device or a link to a program). As shown, the content can have a plurality of attributes defined, such as the content name, file extension, file location on the device, time, date, or other properties. The attributes also include a secure field and an allowed users list. The secure field is set to a value (e.g., yes or no) to indicate whether the content is protected with a camera-based user authentication scheme. If the content is secure, then the allowed users list includes data regarding the users allowed, upon authentication, to view or access the content. For each user (user1, user2, user3) in the list, the list includes data to identify the user such as the user's name and image. If the content is not secure (e.g., the secure field is set to no), then any user of the device can view or access the content without authentication.

Figure 2 shows an embodiment of a method 200 for setting up allowed users for viewing or accessing content on a device. The method 200 can be used to build the user list for a protected content or add a user to the list. A file or group of files (folder) is selected, for instance by an authorized user, for content protection. The type of protection (e.g., password, fingerprint, camera authentication) is selected. The steps of the method 200 are repeated for each selected file. At step 210, the method 200 verifies if camera authentication is the selected type of protection for a selected stored in a file. If the condition in step 210 is true, then at step 220 a user (an existing user or a new user of the device) is added to the list of allowed users for the file. Otherwise, a next file is considered. To add a user to the allowed users list for the file, the method 200 checks at step 230 if the user is a new user of the device. If this is true, then at step 240 the user's image is captured by the device camera. The image is captured and stored as image data in digital format, for instance as a pixel representation. The image can be encoded in any suitable digital image format that is supported by the device, for example as a jpeg, mpeg or fig file. Otherwise, if the user is an existing user registered on the device, then the user's image is previously captured and stored in digital format on the device, and step 240 is skipped. Next, at step 250, the user's image and name is added as user data in the list of allowed users. If the allowed user is an existing user, the user's data can be added from the device list of known users. Otherwise, if the allowed user is a new user, the user's image can be captured and added with the new user name to the list of users. Steps 230 to 250 can be repeated for each user to be added to the allowed users list for that file. At step 260, the secure field for the file is set to yes. The next file in the group is then considered.

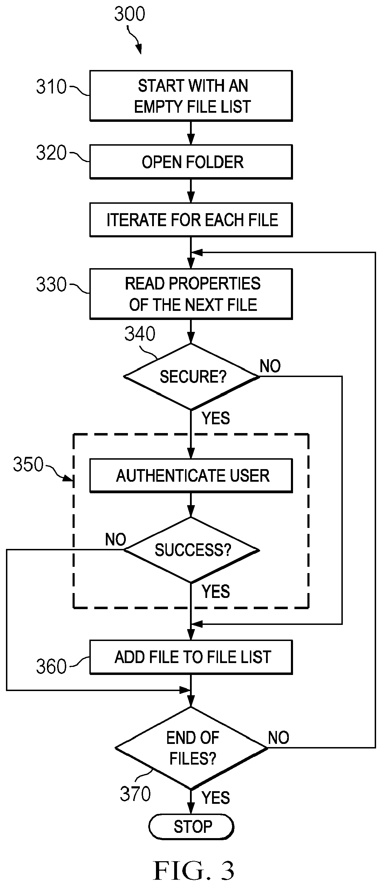

In an embodiment, when a current user opens a folder on the device, a list of files that are permitted to view or access by the current user is generated by the device. The list includes each file having the current user's data (name and image) in the list of allowed users for that file. Figure 3 shows an embodiment of a method 300 for generating a list of files that are authorized for accessing or viewing by the user. At step 310, the method 300 starts with an empty file list. At step 320, a folder of the files (e.g., an image or video folder) on the device is opened by the user. The folder can be opened when the user accesses the folder to view its content. The method 300 then iterates the steps 330 to 370 for each file in the folder. At step 330, the attributes of a next file in the folder are read. At step 340, the method 300 verifies if the secure field of the file is set to yes. If this is true, then the method 300 proceeds to step 350. Otherwise, the method 300 proceeds to step 360. At step 350, the user is authenticated according to the camera-based user authentication scheme. Specifically, the user image is captured without the user being aware, e.g., without input from or notifying the user. The user captured image is then compared to the images in the allowed users list associated with that file. The user is authenticated if the captured image matches an image in the list. For instance, a digital data representation of the captured image, such as an image file including pixel values forming the image, is compared to stored image files of the allowed users. The comparison may comprise calculating the similarity between the pixel values of the captured image and the pixel values of the stored images corresponding to the same positions in the image frame. Similarity of the images can be determined based on the difference or proximity in values for each compared pixel. In an embodiment, the comparison may include applying some face recognition algorithm to determine whether the face features in the captured image, such as the distances between the eyes, nose, or other face features, are similar to the face features in the stored image files for allowed users. Similarity of the face features can be determined according to a threshold value indicating a good match of face features. In other embodiments, any suitable scheme or algorithm known to a person of ordinary skill in the art can be used to determine sufficient similarity in the captured image of the user and the stored images of the allowed users, and accordingly verify whether the user is an allowed user. If the user authentication is a success, then the method 300 proceeds to step 360. Otherwise, the method 300 proceeds to step 370. At step 360, the file is added to the file list for user viewing or access. At step 370, the method 300 checks if there are more files in the folder. If this is true, then the method 300 repeats the steps 330 to 370 for another file in the folder. Otherwise, the method 300 ends.

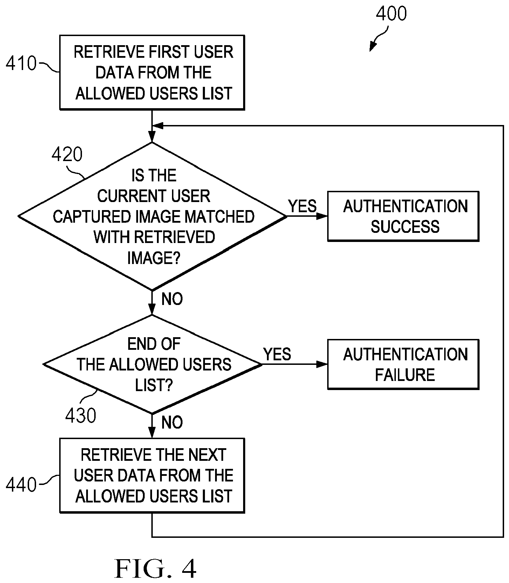

Figure 4 shows an embodiment of a method 400 for authenticating a user to access or view content on a device. The method 400 is a camera-based authentication scheme to allow a user to view or access the content, e.g., a file, a folder, or any data to be represented on the screen of the device. As described above, the user is authenticated using the data stored in the allowed users list of that file. At step 410, the first user data in the allowed users list field is retrieved. The data includes a name and an image of the first user in the list. At step 420, the method 400 verifies if the current user is among the users in the allowed users list using the user's captured image and the allowed users images stored on the device. As described above, the image of the user is captured without the user's awareness and then compared to the images of the allowed users in the list. The current user image is captured in digital format, e.g., in the form of pixels in an image file, by a camera on the mobile device. For instance, the user's image is captured by a front digital camera on the device facing the current user. The image is captured without prompting the user or input from the user, upon the user attempt to access or view the content. For example, the device captures the user face image when the user opens an image album or accesses a screen of apps on the device. If the user is determined to be one of the allowed users for the content, based on the captured user image and the stored images of allowed users, then the user is authenticated and the method 400 ends. Otherwise, at step 430, the method 400 checks whether the end of the allowed users list is reached. If there is more user data to consider in the allowed users list, then at step 440 the next user data is retrieved from the allowed users list. The method 400 then returns to step 420. If no more user data remains in the list, then the authentication of the current user fails and the method 400 ends. When user authentication fails, the content is not shown to the current user.

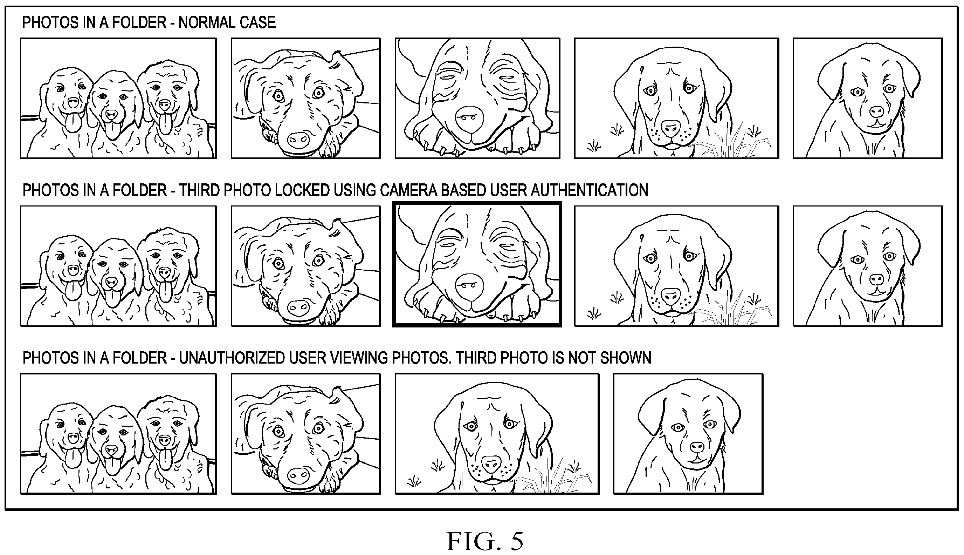

Figure 5 shows an example of content protection according to the camera-based user authentication scheme. In a normal case without content protection, a folder includes a total of five dog pictures that can be viewed or accessed. The folder can be a picture album stored on the device, such as a smartphone. In absence of protection, a user can view all the pictures upon selecting and accessing the folder. For example, when the user taps on the screen to view the album, the five pictures appear on the screen and can be viewed. The user can also tap on any of the pictures to enlarge the picture. When a picture is protected, e.g., by setting the secure property of that image to yes, camera-based user authentication is applied. For example, if the third picture is protected, then a user should be authenticated first, for instance using the method 400, in order to allow the authenticated user to view that picture. If the user authentication fails, then the user can only view the remaining four pictures upon selecting the folder, and the protected picture remains invisible to the user. Since the camera-based authentication is implemented without input form the user and without prompting the user, the user is unaware of the existence of the protected image in the folder.

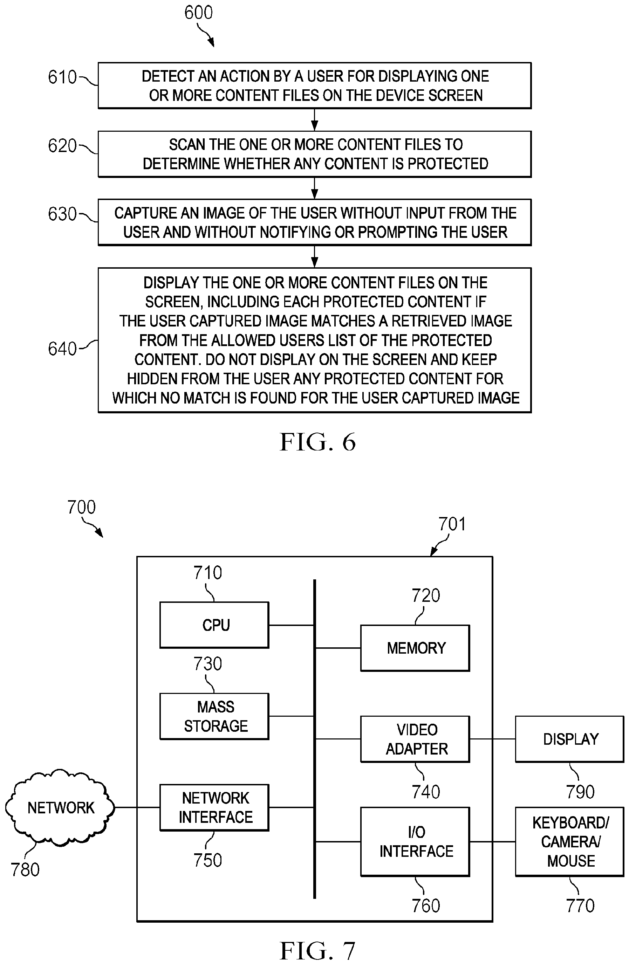

Figure 6 shows another embodiment of a method 600 for camera-based user authentication for content on a device. At step 610, an action by a user for viewing content or a representation of the content on the device screen is detected. For example, a user taps on the screen of a smartphone or tablet to open an image or video album, or taps on the screen to view one or more apps. At step 620, the attributes of the one or more content files are fetched to determine whether any content is protected. For example, the attributes of the image or video files in an album folder are examined to determine which image/video is protected. At step 630, an image of the user is captured without the user being aware, e.g., without input from the user and without notifying or prompting the user. At step 640, the one or more content files are displayed on the screen, including each protected content if the captured user's image is determined to belong to an allowed user of the content according to the stored images of the allowed users, as described above. Any protected content that does not include the user in the allowed users list is prohibited from being displayed on the screen and is kept hidden from the user.

Figure 7 is a block diagram of a processing system 700 that can be used to implement various embodiments including the methods above. For instance, the processing system 700 can be, or is part of, a device such as a smartphone, a computer tablet, or other suitable devices with processing and camera capability. Specific devices may utilize all of the components shown, or only a subset of the components, and levels of integration may vary from device to device. Furthermore, a device may contain multiple instances of a component, such as multiple processing units, processors, memories, transmitters, receivers, etc. The processing system 700 may comprise a processing unit 701 equipped with one or more input/output devices, such as a speaker, microphone, mouse, touchscreen, keypad, keyboard, printer, display, and the like. The input/output devices also include a camera for capturing digital picture or video. The processing unit 701 may include a central processing unit (CPU) 710, a memory 720, a mass storage device 730, a video adapter 740, and an I/O interface 760 connected to a bus. The bus may be one or more of any type of several bus architectures including a memory bus or memory controller, a peripheral bus, a video bus, or the like.

The CPU 710 may comprise any type of electronic data processor. The memory 720 may comprise any type of system memory such as static random access memory (SRAM), dynamic random access memory (DRAM), synchronous DRAM (SDRAM), read-only memory (ROM), a combination thereof, or the like. In an embodiment, the memory 720 may include ROM for use at boot-up, and DRAM for program and data storage for use while executing programs. In embodiments, the memory 720 is non-transitory. The mass storage device 730 may comprise any type of storage device configured to store data, programs, and other information and to make the data, programs, and other information accessible via the bus. The mass storage device 730 may comprise, for example, one or more of a solid state drive, hard disk drive, a magnetic disk drive, an optical disk drive, or the like.

The video adapter 740 and the I/O interface 760 provide interfaces to couple external input and output devices to the processing unit. As illustrated, examples of input and output devices include a display or touchscreen 790 coupled to the video adapter 740 and any combination of camera/keyboard/mouse 770 coupled to the I/O interface 760. Other devices may be coupled to the processing unit 701, and additional or fewer interface cards may be utilized. For example, a serial interface card (not shown) may be used to provide a serial interface for a printer.
The processing unit 701 also includes one or more network interfaces 750, which may comprise wired links, such as an Ethernet cable or the like, and/or wireless links to access nodes or one or more networks 780. The network interface 750 allows the processing unit 701 to communicate with remote units via the networks 780. For example, the network interface 750 may provide wireless communication via one or more transmitters/transmit antennas and one or more receivers/receive antennas. In an embodiment, the processing unit 701 is coupled to a local-area network or a wide-area network for data processing and communications with remote devices, such as other processing units, the Internet, remote storage facilities, or the like.
Further embodiments of the present invention are provided in the following. It should be noted that the numbering used in the following section does not necessarily need to comply with the numbering used in the previous sections.
Embodiment 1. A method for camera-based user authentication for content on a device, the method comprising:
   providing a content on the device, the content associated with one or more user identifiers representing authorized users of the content;
   in response to a content access request from the user, capturing an image of the user without the user being aware of the capturing;
   determining whether the user is among the authorized users based on the captured image and the user identifiers of the content; and
   displaying the content or a representation of the content on a screen of the device to allow the user to access the content if the user is determined to be among the authorized users of the content.
Embodiment 2. The method of embodiment 1 further comprising prohibiting display of the content or the representation of the content on the screen if the content is protected and the user is not among the users allowed to view the content according to the captured image and the user identifiers of the content.
Embodiment 3. The method of embodiment 1, further comprising:
   detecting the content access request by detecting an action by the user, the action for viewing content or a representation of the content on the screen of the device.
Embodiment 4.The method of embodiment 3, wherein the detected action is the user selecting a folder including the content.
Embodiment 5. The method of embodiment 4 further comprising:
   obtaining user identifiers of each file in the folder to determine whether content in each file is protected; and
   displaying on the screen the content in the file or a representation of the content if the content is protected and the user is determined to be among authorized users allowed to view the content in the file according to the captured image of the user and the user identifiers of the content.
Embodiment 6. The method of embodiment 1, wherein the content is an image or a video.
Embodiment 7. The method of embodiment 1, further comprising:
   obtaining the user identifiers of the content by retrieving a secure field from a property list for the content, the secure field indicating whether the content is protected.
Embodiment 8. The method of embodiment 1, further comprising:
   obtaining the user identifiers of the content includes by retrieving an allowed users list of the content, the allowed users list including an image of each user allowed to access the content.
Embodiment 9. A method for camera-based user authentication for content on a device, the method comprising:
   in response to a user attempting to access a content on a device, determining whether the user is authorized to access the content based on attributes of the content, the attributes indicating whether the content is protected and an allowed users list including an image of each user allowed to access the content; and
   prohibiting the user from accessing the content or a representation of the content if the content is protected and the user is excluded from an allowed users list.
Embodiment 10. The method of embodiment 9 further comprising displaying the content on a screen of the device if the content is not protected, or if the content is protected and the user is determined to be in the allowed users list.
Embodiment 11. The method of embodiment 9, wherein the allowed users list includes a name with an image of each user authorized to access the content if a secure field in the attributes indicates that the content is protected.
Embodiment 12. The method of embodiment 9 further comprising adding an authorized user for the content by adding a name and image of a previously registered user on the device or by capturing an image of a new user of the device and adding a name and the captured image of the new user to the allowed users list.
Embodiment 13. The method of embodiment 12 further comprising setting the secure field of the content to yes.
Embodiment 14. The method of embodiment 12, wherein the authorized user for the content is added if an option for security on the content is set to a camera-based user authentication.
Embodiment 15. The method of embodiment 9, wherein the image of the user is captured upon the user selecting a folder including the content.
Embodiment 16. The method of embodiment 9, wherein the attributes are obtained without input from the user and without notifying or prompting the user.
Embodiment 17. A device supporting camera-based user authentication for content, the device comprising:
   at least one processor coupled to a memory; and
   a non-transitory computer readable storage medium storing programming for execution by the at least one processor, the programming including instructions to:
      provide a content on the device, the content associated with one or more user identifiers representing authorized users of the content;
      in response to a content access request from the user, capture an image of the user without the user being aware of the capturing;
      determine whether the user is among the authorized users based on the captured image and the user identifiers of the content; and
      display the content or a representation of the content on a screen of the device to allow the user to access the content if the user is determined to be among the authorized users of the content.
Embodiment 18. The device of embodiment 17, wherein the programming further includes instructions to prohibit display of the content or a representation of the content on the screen if the content is protected and the user is not among the users allowed to view the content according to the captured image and the user identifiers of the content.
Embodiment 19. The device of embodiment 17, further comprising:
   detecting the content access request by detecting an action by the user, the action for viewing content or a representation of the content on the screen of the device detecting the content access request.
Embodiment 20. The device of embodiment 19, wherein the detected action is the user tapping on the screen to select a folder including the content.
Embodiment 21. The device of embodiment 17, wherein the content is an image or a video.
Embodiment 22. The device of embodiment 17, wherein the device is a smartphone or a computer tablet.

While several embodiments have been provided in the present disclosure, it should be understood that the disclosed systems and methods might be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the scope disclosed herein.

## Claims

1. A method for camera-based user authentication for content on a device, wherein the device comprises a front camera, the method comprising:
setting up an allowed user for viewing a content, wherein the allowed user's image is captured and stored on the device;
in response to a content access request, capturing, by the front camera, an image of an user without notifying the user of the capturing;
displaying the content or a representation of the content on a screen of the device if the captured image of the user matches the allowed user's image; and
prohibiting displaying the content or the representation of the content if the captured image of the user does not match the allowed user's image.

2. The method of claim 1, wherein the content comprises at least one of an image, a folder, a video, a document file, a program on the device or a link to a program.

3. The method of any one of claims 1 to 3, further comprising: detecting the content access request.

4. The method of any one of claims 1 to 3, further comprising: detecting the content access request by detecting an action by the user, the action for viewing content or a representation of the content on the screen of the device.

5. The method of claim 4, wherein the detected action is the user selecting a folder including the content.

6. The method of claim 4, wherein the action comprises the user tapping on the screen of the device.

7. The method of any one of claims 1 to 6, wherein the device is a smartphone or a computer tablet.

8. An electronic device, the device comprising:
at least one processor;
a front camera coupled to the processor;
a screen coupled to the processor; and
wherein the processor is configured to:
set up an allowed user for viewing a content, wherein the allowed user's image is captured and stored on the electronic device;
in response to a content access request, instruct the front camera to capture an image of an user without notifying the user of the capturing;
display the content or a representation of the content on the screen if the captured image of the user matches the allowed user's image; and
prohibit displaying the content or the representation of the content if the captured image of the user does not match the allowed user's image.

9. The electronic device of claim 8, wherein the content comprises at least one of an image, a folder, a video, a document file, a program on the device or a link to a program.

10. The electronic device of any one of claims 8 to 9, wherein the processor is further configured to: detect the content access request.

11. The electronic device of claim 10, wherein detecting the content access request comprises:
detecting an action by the user, the action for viewing content or a representation of the content on the screen of the device.

12. The electronic device of claim 11, wherein the action is the user selecting a folder including the content.

13. The electronic device of claim 11, wherein the action comprises the user tapping on the screen of the device.

14. The electronic device of any one of claims 8 to 12, wherein the electronic device is a smartphone or a computer tablet.

15. A computer readable storage medium comprising software code adapted to perform the method of any one of claims 1 to 7,
